# EUROPÄISCHE PATENTANMELDUNG

(11) **EP 0 905 389 A2**
(43) Veröffentlichungstag der Anmeldung: **31.03.1999**
(21) Anmeldenummer: 98117070.7
(22) Anmeldetag: 09.09.1998
(51) Int. Cl.: F16B 35/00

(54) **Betonschraube**

(30) Priorität: 25.09.1997 DE 19742292
(71) Anmelder: TOGE-Dübel A. Gerhard KG, 90431 Nürnberg (DE)
(72) Erfinder: Gerhard, Anton, 90427 Nürnberg (DE); Gerhard, Andreas, 90427 Nürnberg (DE)
(74) Vertreter: Rau, Manfred, Dr. Dipl.-Ing.

(57) **Zusammenfassung**

Bei einer Betonschraube mit einem im wesentlichen zylinderförmigen Schaft und einem zumindest abschnittsweise hieran ausgebildeten Gewinde, wobei ein in Einschraubrichtung vorne liegender Schraubenabschnitt aus gehärtetem Stahl und ein in Einschraubrichtung gesehen hinten liegender Schraubenabschnitt aus korrosionsfestem Stahl besteht und die beiden Schraubenabschnitte miteinander verbunden sind, ist zur Erzielung einer optimalen Werkstoffauswahl bei leichter Herstellbarkeit vorgesehen, daß der in Einschraubrichtung hinten liegende Schraubenabschnitt (5) einen in Einschraubrichtung vorne liegenden Ansatz (7) aufweist, auf welchem der zweite, aus gehärtetem Stahl bestehende vordere Schraubenabschnitt formschlüssig und drehfest verbunden aufgesetzt ist.

## Beschreibung

Die Erfindung bezieht sich auf eine Betonschraube nach dem Oberbegriff des Anspruches 1.

Ein Problem bei derartigen Betonschrauben besteht darin, daß sie ein selbstschneidendes Gewinde aufweisen müssen, welches sich beim Einschrauben in das Bohrloch selbst ein Gewinde in die Bohrlochwand schneidet und dementsprechend aus sehr hartem Werkstoff, wie z.B. gehärtetem Stahl, ausgebildet sein muß.

Bei vielen Befestigungsproblemen, z. B. bei der Befestigung von Leitplanken an Betonpfosten, steht ein Teil der Schraube über das Bohrloch hinaus und ist dementsprechend Witterungseinflüssen ausgesetzt. Ein gehärteter Stahl, wie er für ein selbstschneidendes Gewinde optimal ist, läßt sich aber wiederum nicht korrosionsbeständig ausbilden, so daß zwar nicht bei dem im Bohrloch befindlichen Teil, der durch den umgebenden Beton geschützt ist, jedoch bei dem herausragenden Teil der Betonschraube eine erhebliche Korrosionsgefahr besteht.

Aus der DE 25 49 147 A1 ist eine Schraube der gattungsgemäßen Art bekannt, an deren Grundkörper ein mit einer Rändelung versehener Ansatz angebracht ist, auf den ein gehärteter vorderer Gewindeabschnitt aufgesetzt und mittels Klebstoff mit diesem verbunden ist. Die Festigkeit der Klebeverbindung einerseits und die Scherfestigkeit des Ansatzes andererseits lassen bei dieser Lösung zu wünschen übrig.

Aus der DE 44 17 921 A1 ist eine ähnlich ausgestaltete Betonschraube bekannt, wobei die Verbindung zwischen dem mit einer Rändelung versehenen Zapfen und dem vorderen hülsenartigen Gewindeabschnitt aus gehärtetem Stahl durch Kraftschluß erfolgt.

Der Erfindung liegt die Aufgabe zugrunde, eine Betonschraube der gattungsgemäßen Art so auszugestalten, daß sie in bekannter Weise sowohl hohen Anforderungen an die Härte zumindest der vorderen Gewindeabschnitte als auch an die Korrosionsbeständigkeit des aus dem Bohrloch gegebenenfalls herausragenden Schraubenteils gerecht wird, und dabei kostengünstig herstellbar ist und eine hohe Festigkeit aufweist.

Diese Aufgabe wird erfindungsgemäß durch die Merkmale im Kennzeichnungsteil des Anspruches 1 gelöst. Durch die Ausgestaltung der Oberfläche des Ansatzes wird erreicht, daß der Klebstoff sich einerseits formschlüssig im Ansatz verankert und andererseits durch die Oberflächenvergrößerung des Ansatzes eine größere Klebefläche hat. Die Festigkeit der Klebeverbindung zwischen Zylinderhülse und Ansatz wird hierdurch besonders günstig. Es kommt hinzu, daß das Flächenträgheitsmoment des Ansatzes nicht reduziert wird mit der Folge, daß der Ansatz bei einem vorgegebenen Nennmaß und bei einem vorgegebenen Material der Schraube besonders hohe Drehmomente beim Einschrauben der Schraube in Beton übertragen kann. Das Gewinde im Beton wird durch das an der Gewindehülse angebrachte Gewinde geschnitten, d. h. das beim Einschrauben der Schraube in Beton angreifende Drehmoment wird in vollem Umfang von dem Ansatz übertragen; dessen tragender Querschnitt ist also von besonderer Bedeutung. Dies wird noch vorteilhaft unterstützt, wenn die Zylinderhülse möglichst dünnwandig ausgebildet ist.

Nachfolgend wird die Erfindung anhand eines bevorzugten Ausführungsbeispiels in Verbindung mit der Zeichnung näher erläutert. Dabei zeigen:
- Fig. 1: eine perspektivische Ansicht einer erfindungsgemäßen Betonschraube,
- Fig. 2: eine perspektivische Explosionsdarstellung des in Einschraubrichtung vorderen Endes der Betonschraube mit noch nicht aufgesetzter Zylinderhülse und
- Fig. 3: eine Draufsicht auf die Betonschraube in Explosionsdarstellung.

Die in der Zeichnung dargestellte Betonschraube 1 weist einen zylinderförmigen Grundkörper 2 und einen Schraubenkopf 3 auf.

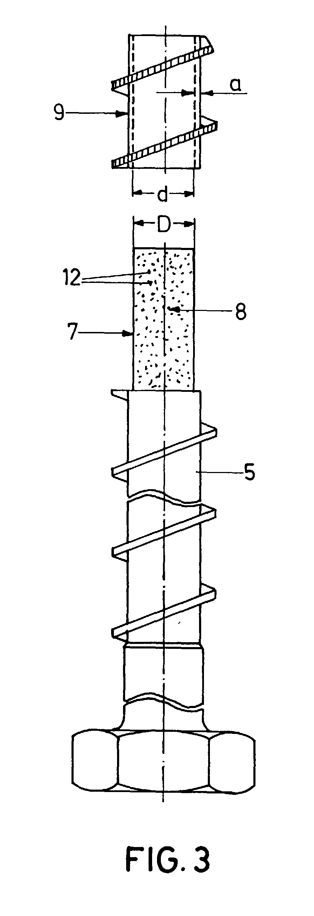

Der in Einschraubrichtung gesehen vordere Abschnitt 5 des Grundkörpers 2 weist einen gegenüber dem dem Schraubenkopf 3 benachbarten hinteren Bereich verminderten Außendurchmesser, d. h. Kerndurchmesser, auf und ist mit einem Gewinde 6 versehen. Am dem Schraubenkopf 3 entgegengesetzten freien äußeren Ende des Grundkörper-Abschnitts 5 ist ein zylindrischer Ansatz 7 mit nochmals reduziertem Außendurchmesser ausgebildet, der gemäß Fig. 3 mit einer Rauhigkeit 8 versehen ist.

Auf den Ansatz 7 ist eine Zylinderhülse 9 aufsetzbar, deren Außendurchmesser dem Außendurchmesser des Abschnitt 5 und deren Innendurchmesser etwa dem Außendurchmesser des Ansatzes 7 entspricht.

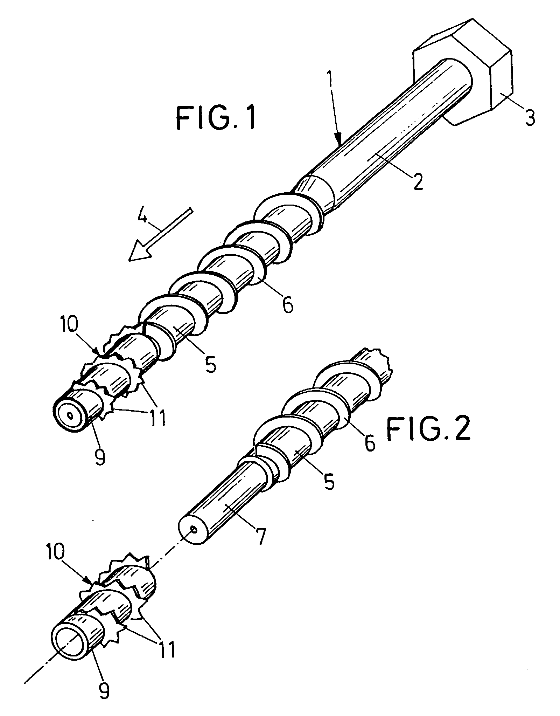

Die Zylinderhülse 9 weist ein Gewinde 10 auf, welches in dem in Fig. 1 dargestellten aufgesetzten Zustand das Gewinde 6 stetig fortsetzt und das die gleiche Steigung wie das Gewinde 6 aufweist. Das Gewinde 10 ist mit einer Zahnung 11 versehen und dementsprechend als selbstschneidendes Gewinde ausgebildet. Die nähere Ausgestaltung eines derartigen selbstschneidenden Gewindes wird beschrieben in PCT-EP 97/03867. Wie insbesondere Fig. 2 entnehmbar ist, läuft das Gewinde 10 zum vorderen Ende der Gewindehülse 9 in deren Außenfläche aus, so daß zu Beginn des Einschraubens ein Einführen in ein Bohrloch möglich ist. Das gesamte Gewinde im Bohrloch wird somit nicht von dem Beginn der Zahnung 11 geschnitten, sondern über den Bereich, über den sich das Gewinde bis auf seinen vollen Außendurchmesser erweitert.

Auf den Abschnitt 7 wird Klebstoff, vorzugsweise ein Ein-Komponenten-Kleber, beispielsweise ein Epoxidharzkleber, aufgebracht und die Zylinderhülse 9 wird aufgeschoben, so daß sich nach einem thermischen Aushärten ein außerordentlich fester, allen Anforderungen standhaltender Verbund ergibt.

Die Zylinderhülse 9 besteht aus gehärtetem Stahl. Das Härten erfolgt durch Einsatzhärten mit einer Eindringtiefe von etwa 0,2 mm. Dagegen bestehen der Rest der Betonschraube 1, also der Abschnitt 5 bzw. der Grundkörper 2 und der Schraubenkopf 3, aus nicht gehärtetem, jedoch korrosionsfestem Stahl, in der Regel also VA-Stahl.

Wie Fig. 3 entnehmbar ist, weist der Ansatz 7 eine Rauhigkeit 8 auf, die durch eine Vielzahl von kleinen Erhöhungen 12 mit einer Höhe von 20 bis 50 µm bevorzugt 30 bis 40 µm und besonders bevorzugt 35 µm gebildet werden. Die Zahl der Erhöhungen liegt im Bereich von 10 bis 15 pro mm². Die Erhöhungen werden dadurch erzeugt, daß die Walzbacken, mittels derer die Schraube 1 samt Ansatz 7 durch Walzen hergestellt wird, in dem Bereich, der den Ansatz 7 abwälzt, mittels Funkenerosion mit einer künstlichen Rauhigkeit, d.h. Vertiefungen versehen wird. Diese Vertiefungen bilden sich beim Walzen der Schraube 1 auf dem Ansatz 7 als Erhöhungen 8 ab.

Wie weiter aus Fig. 3 hervorgeht, gilt für die Wanddicke a der Zylinderhülse 9 0,6 mm ≤ a ≤ 1,8 mm. Der Außendurchmesser D des Ansatzes 7 ist kleiner als der Innendurchmesser d der Zylinderhülse 9, so daß nach dem Aufschieben der Zylinderhülse 9 auf den Ansatz 7 ein Spalt von etwa 0,1 mm Breite verbleibt, der mit Klebstoff ausgefüllt ist. Es gilt also d - D ≈ 0,2 mm. Die Zylinderhülse 9 ist sehr dünnwandig, damit der Ansatz 7 einen möglichst großen Durchmesser aufweist bzw. eine möglichst geringe Durchmesserverringerung gegenüber dem Kerndurchmesser des vorderen Abschnitts 5, um ein Abscheren dieses Ansatzes 7 samt der Zylinderhülse mit Gewindezähnen beim Einschrauben einer Schraube in Beton zu vermeiden. Das gesamte beim Schneiden eines Gewindes in Beton angreifende Drehmoment greift an dem Ansatz 7 an. Die Wanddicke a von 0,6 mm für die Zylinderhülse 9 kommt bei kleinen Nenndurchmessern von 6 oder 8 mm zur Anwendung, während die größere Wandstärke a = 1,0 mm bei Nenndurchmessern von 8 bzw. 10 mm für die Betonschraube 1 angewendet wird. Für Nenndurchmesser 12 mm gilt 1,0 mm ≤ a ≤ 1,4 mm, bei Nenndurchmesser 14 mm gilt 1,2 mm ≤ a ≤ 1,6 mm und bei Nenndurchmesser 16 mm gilt 1,4 mm ≤ a ≤ 1,8 mm.

Der Klebstoff verhakt sich gleichermaßen an den Erhöhungen 12, so daß zwischen der zwischen Zylinderhülse 9 und Ansatz 7 befindlichen Klebstoffschicht und dem Ansatz 7 eine Art Formschluß erreicht wird. Andererseits wird die Oberfläche des Ansatzes 7 im Vergleich zu einer rein zylindrischen Oberfläche durch die zahlreichen Erhöhungen 12, mindestens um 30 %, bevorzugt um mindestens 50 % vergrößert, wodurch auch die haftende Fläche zwischen der Klebstoffschicht und dem Ansatz 7 entsprechend vergrößert wird. Die Klebstoffschicht ist - wie sich aus der geringen Spaltweite ergibt - sehr dünn, so daß hohe Scherkräfte übertragen werden können. Da die Erhöhungen 12 jeweils für sich nur eine geringe Höhe haben, werden die Erhöhungen 12 ohne weiteres in dem Spalt zwischen dem Ansatz 7 und der Zylinderhülse 9 untergebracht, reduzieren also nicht das Flächenträgheitsmoment des Ansatzes 7, das für die Übertragung der geschilderten Drehmomente von großer Bedeutung ist. Durch die durch die geschilderten Erhöhungen 12 gebildete Rauhigkeit 8 wird also das Verhältnis von Flächenträgheitsmoment des Ansatzes 7 und Drehmomentübertragungsmöglichkeit durch die Klebeverbindung optimiert.

## Patentansprüche

1. Betonschraube
- mit einem im wesentlichen zylindrischen Grundkörper (2),
-- an dem zumindest teilweise ein Gewinde (6) ausgebildet ist und
-- der an seinem in Einschraubrichtung (4) vorderen Ende einen im wesentlichen zylindrischen Ansatz (7) aufweist, und
- mit einer Zylinderhülse (9),
-- die auf dem Ansatz (7) angeordnet und mit diesem mittels einer Klebstoffschicht verbunden ist, und
-- die mit einem Gewinde (10) versehen ist, das die gleiche Steigung aufweist, wie das am Grundkörper (2) ausgebildete Gewinde (6),
**dadurch gekennzeichnet,**
**daß** der Ansatz (7) mittels einer großen Zahl von Erhöhungen (12) mit einer Oberflächen-Rauhigkeit versehen ist, deren Höhe 20 bis 50 µm beträgt, wodurch die Oberfläche des Ansatzes (7) gegenüber einer glatten Oberfläche um mindestens 30 % erhöht ist.

2. Betonschraube nach Anspruch 1, **dadurch gekennzeichnet,**
**daß** die Höhe der Erhöhungen (12) 30 bis 40 µm beträgt.

3. Betonschraube nach Anspruch 2, **dadurch gekennzeichnet,**
**daß** die Höhe der Erhöhungen (12) ungefähr 35 µm beträgt.

4. Betonschraube nach einem der Ansprüche 1 bis 3, **dadurch gekennzeichnet,**
**daß** 10 bis 15 Erhöhungen (12) pro mm² vorgesehen sind.

5. Betonschraube nach einem der Ansprüche 1 bis 4, **dadurch gekennzeichnet,**
**daß** die Oberfläche des Ansatzes (7) um mindestens 50 % erhöht ist.

6. Betonschraube nach einem der Ansprüche 1 bis 5, **dadurch gekennzeichnet,**
**daß** für die Wanddicke (a) der Zylinderhülse (9) gilt:
0,6 mm ≤ a ≤ 1,8 mm.

7. Betonschraube nach einem der Ansprüche 1 bis 6, **dadurch gekennzeichnet,**
**daß** der mit Klebstoff gefüllte Spalt zwischen dem Ansatz (7) und der Zylinderhülse (9) eine Weite von etwa 0,1 mm aufweist.

8. Betonschraube nach einem der Ansprüche 1 bis 7, **dadurch gekennzeichnet,**
**daß** die Klebstoffschicht durch einen thermisch ausgehärteten Ein-Komponenten-Kleber gebildet ist.

9. Betonschraube nach einem der Ansprüche 1 bis 8, **dadurch gekennzeichnet,**
**daß** die Zylinderhülse (9) mit dem Gewinde (10) einsatzgehärtet ist.
